# EUROPÄISCHE PATENTSCHRIFT

(11) **EP 1 142 297 B1**
(45) Veröffentlichungstag und Bekanntmachung des Hinweises auf die Patenterteilung: **19.03.2003**
(21) Anmeldenummer: 99965379.3
(22) Anmeldetag: 01.12.1999
(51) Int. Cl.: H04N 1/00, H04N 5/232

(54) **KOMMUNIKATIONSFÄHIGE BILDAUFNAHMEEINRICHTUNG**
COMMUNICATION-ENABLED IMAGE RECORDING DEVICE
DISPOSITIF DE PRISE DE VUES SE PRETANT A LA COMMUNICATION

(30) Priorität: 17.12.1998 DE 19858389
(43) Veröffentlichungstag der Anmeldung: 10.10.2001
(73) Patentinhaber: SIEMENS AKTIENGESELLSCHAFT, 80333 München (DE)
(72) Erfinder: LAIER, Joachim, D-81539 München (DE); MATTES, Heinz, D-81739 München (DE)
(86) Internationale Anmeldenummer: DE9903802
(87) Internationale Veröffentlichungsnummer: WO00036817

(56) Entgegenhaltungen:
- EP-A- 0 833 494
- WO-A-92/21211
- WO-A-99/17529
- US-A- 5 479 206
- US-A- 5 634 144
- US-A- 5 666 159

## Beschreibung

Die Erfindung betrifft eine kommunikationsfähige Bildaufnahmeeinrichtung für Stand- und/oder Bewegtbilder, insbesondere digitale Kamera, mit einem Halbleiter-Bildaufnahmesensor, insbesondere einem CMOS/CCD-Chip oder dergleichen Array, einer Bildaufnahme- und Bilddatentransfer-Steuereinheit für den Bilddaten- und/oder Text- oder Audiodatentrans-fer zu einer externen Datensenke, wie z.B. einem Personal Computer mit Bildwiedergabemonitor oder einem Massenspeicher sowie mit einem Bediendisplay und mit Bedienelementen zur Einstellung von Bedienmodi sowie ein Verfahren zum Betreiben einer derartigen kommunikationsfähigen Bildaufnahmeeinrichtung.

Aus dem Stand der Technik sind digitale Kameras mit integrierten Fest- oder Wechselspeichern, basierend auf CCD-Sensoren, seit etwa Anfang der 90er Jahre bekannt und auf dem Markt erhältlich. Derartige Kameras oder Bildaufnahmeeinrichtungen besitzen sowohl ein Bedien- als auch ein Anzeigedisplay, mit deren Hilfe die einzelnen Funktionen für die Bildaufnahme gesteuert werden können. Darüber hinaus ist mit den Displays auch ein Betrachten der elektronisch festge/haltenen Aufnahmen zur Überprüfung der Bildqualität vor Ort möglich.

Über vorhandene Standard-Schnittstellen kann unter Verwendung einer geeigneten Software ein Auslesen der gespeicherten Bilddaten und Übernehmen dieser Inhalte in den Speicher eines Personal Computers erfolgen, um die Aufnahme digital zu verarbeiten oder über einen angeschlossenen Drucker oder ein sonstiges Printmedium auszugeben.

Bekannt sind auch sogenannte Datenkommunikations-Terminals in kompakter Telefonform, mit deren Hilfe z.B. E-Mails empfangen oder versendet werden können. In Verbindung mit einem Notebook oder einem Personal Computer lassen sich derartige Terminals in Telefonform als kabelloses Modem verwenden. Mit steigenden Übertragungskapazitäten der Mobilfunkstandards besteht die Möglichkeit, bei der mobilen Kommunikation auch Bilddatenmengen in Echtzeit zu übertragen.

Das unter der Produktkennzeichnung Datascope of Kyocera K.K., Japan bekannte Handy mit Bildtelefonadapter läßt sich als Bildschirmtelefon einsetzen.

Mit einem beim Datascope-Handy vorhandenen LC-Display als Sucher besteht die Möglichkeit, farbige digitale Aufnahmen anzufertigen. Das im Sucher erkennbare Bild wird im Flashspeicher des Handys als JPEG-Datei gespeichert. Die im Flashspeicher des Datascopes abgelegte Bilddatei kann dann mit einer speziellen Dateiübertragungsfunktion, der sogenannten X-Modem-Funktion, über ein Standardnetzwerk als binäre Datei verschickt werden. In gleicher Weise besteht die Möglichkeit, mit dem Bildtelefon Daten aus dem Netz zu empfangen.

Aus der US 5,666,159 ist ein elektronisches Kamerasystem mit programmierbarer Datenübertragung vorbekannt, wobei der dortige Grundgedanke darin besteht, bestimmte Datenpakete nur ausgewählten Nutzern zur Verfügung zu stellen, wobei für die eigentliche Datenübertragung auf ein öffentliches Teiekommunikationsnetz, insbesondere ein Mobilfunknetz zurückgegriffen wird.

Ein Infrarot-Modul zur Verbindung einer Kamera mit einem Computer ist in der US 5,634,144 gezeigt. Das dortige Infrarot-Modul wird mit einer Doppelfunktion belegt. Hierfür wird das in einer elektronischen Kamera vorhandene Autofokus-system, basierend auf Infrarot-Abstandsmessung, in einen speziellen Betriebszustand versetzt, so daß eine Datenübertragung nach Art einer IRDA-Schnittstelle möglich wird. Zu diesem Zweck ist ein Modeselektor vorgesehen, der zwischen Autofokus und Kommunikation umschaltet. Mit einer solchen Infrarot-Schnittstelle soll dann die Möglichkeit bestehen, über einen Personal-Computer bestimmte Kameraparameter zu ändern oder die vorhandenen Parameter auszulesen, um diese zu überprüfen. In einer weiteren dort offenbarten Alternative soll die Schnittstelle auch dazu dienen, Bildinformationen, d.h. gespeicherte Bilder von der Kamera hin zum Computer zu übertragen. Es besteht allerdings keine Möglichkeit, Rückmeldungen, insbesondere über einen erfolgten Datentransfer auf einem Kameradisplay darzustellen.

Der oben beschriebene Stand der Technik weist jedoch den Nachteil auf, daß für die Darstellung von Benutzer- und/oder Statusinformationen für die eigentliche Übertragungsoperation eine zusätzliche Anzeigeeinrichtung, beispielsweise das Display eines Computersystems erforderlich ist. Erst durch diese weiteren technischen Mittel besteht die Möglichkeit, daß der Benutzer bei der Kommunikation und Datenübertragung den Zustand der einzelnen Operationen bzw. Erfolg oder Mißerfolg beurteilen kann.

Es ist daher Aufgabe der Erfindung, eine kommunikationsfähige Bildaufnahmeeinrichtung für Stand- und/oder Bewegtbilder, insbesondere eine digitale Kamera und ein Verfahren zum Betreiben einer derartigen Bildaufnahmeeinrichtung anzugeben, welche bzw. welches es in besonders einfacher Weise ermöglicht, die erforderlichen Statusinformationen und/oder Anweisungen insbesondere für den Bilddaten- oder sonstigen Datentransfer darzustellen, wobei diese Möglichkeit unab-hängig von dem verwendeten Typ der Bildaufnahmeeinrichtung bzw. der jeweiligen Kamera sein soll. Weiterhin sollen beim Aufbau von Kommunikationssystemen unter Nutzung spezieller digitaler Bildaufnahmeeinrichtungen die Gesamtkosten gering gehalten werden, ohne daß auf eine an sich gewünschte Funktionalität und Funktionsvielfalt verzichtet werden muß.

Die Lösung der Aufgabe der Erfindung erfolgt mit einer kommunikationsfähigen Bildaufnahmeeinrichtung für Stand- und/oder Bewegtbilder, insbesondere einer digitalen Kamera, wie sie im geltenden Patentanspruch 1 definiert ist. Verfahrensseitig wird auf das Betreiben einer digitalen Bildaufnahmeeinrichtung gemäß Definition nach Patentanspruch 7 verwiesen.

Die Unteransprüche stellen zweckmäßige Ausgestaltungen und Weiterbildungen der Erfindung dar.

Der Grundgedanke der Erfindung besteht darin, auf eine zusätzliche Anzeigeeinheit oder Display zu verzichten, indem das in der Bildaufnahmeeinrichtung ohnehin vorhandene Bediendisplay quasi mit einer Doppelfunktion belegt wird. So werden in einem Speicherbaustein, welcher Bestandteil des eigentlichen Kameraspeichers sein kann, Bilder abgelegt, welche auch Texte und/oder Symbole enthalten, die dem Benutzer Informationen über den Status der Bilddatenkommunikation bzw. des Kommunikationssystems geben oder welche Anweisungen zur Bedienung des Systems umfassen.

Diese Statusinformation und/oder Anweisungen für den Bilddaten- oder sonstigen Datentransfer können über eine an sich vorhandene Schnittstelle in den Speicherbaustein respektive Bildspeicher übernommen werden, aber auch in einfacher Weise fotografisch erfaßt werden.

Möglichkeit, auf den Speicherbaustein zuzugreifen, um die gewünschte Darstellung der Statusinformationen und/oder der Anweisungen auf dem Display freizugeben.

Demnach ist konkret ein Speicherbaustein zur Darstellung der vorbeschriebenen Statusinformationen und/oder Anweisung für den Bilddatentransfer, aber auch für den Transfer begleitender Audiodaten auf dem Bediendisplay vorgesehen, wobei der Speicherbaustein mit einer Schnittstelle in Verbindung steht. Über diese Schnittstelle können dann extern angebotene Ziffern- und/oder Buchstabenfolgen und/oder Grafiken oder dergleichen Darstellungen zur Identifikation des jeweiligen Status oder für die Bedienungsanweisung in den Speicherbaustein übernommen werden.
Die erwähnte Bilddatentransfer-Steuereinheit hat dann auf den Speicherbaustein Zugriff und ermöglicht es, die gewünschte Darstellung auf dem Bediendisplay zur Anzeige zu bringen bzw. freizugeben.

Der Speicherbaustein ist in einer Ausführungsform der Erfindung ein separat adressierbarer Bereich des zentralen Kameraspeichers. Das Bediendisplay der Kamera, beispielsweise ein Flüssigkristall-(LC)-Display, ist von einem Treiber ansteuerbar, wobei der Treiber Daten aus dem Speicherbaustein nach Vorgabe durch die Steuereinheit abruft.

Die Bilddatentransfer-Steuereinheit ist mit einer Sendeeinheit verbindbar, wobei diese Sendeeinheit auch integraler Bestandteil der Kamera sein kann. Die Sendeeinheit weist eine Funksendebaugruppe mit Antenne zum Herstellen einer drahtlosen Verbindung über ein GSM-, UMTS-, DECT- oder dergleichen Standard-Telekommunikationsnetz und/oder eine Datentransfer-Schnittstelle zur drahtgebundenen, bitorientierten Übertragung über ein ISDN- oder dergleichen Netz auf.

Das Bediendisplay der Kamera bzw. der Displaytreiber ist extern ansteuerbar, wodurch die Möglichkeit besteht, unabhängig von dem jeweiligen Kameratyp über die Fernsteuerbarkeit Statusinformationen und/oder Anweisungen für den Datentransfer, die auf dem Display entsprechend darzustellen sind, abzurufen.
Ebenso wie die Sendeeinheit kann auch die Bilddatentransfer-Steuereinheit integraler Bestandteil der Kamera sein.

Verfahrensseitig wird zum Betreiben der Bildaufnahmeeinrichtung zum Anzeigen von Statusinformationen und/oder Anweisungen auf dem Bediendisplay für oder beim Datentransfer, insbesondere Bilddatentransfer, eine Ziffern- und/oder Buchstabenfolge und/oder eine Grafik oder eine bildliche Darstellung aus dem Kameraspeicher gelesen, wobei die Auswahl der Darstellungen von der Bilddatentransfer-Steuereinheit entsprechend den jeweiligen Befehlen und/oder Operationen automatisch veranlaßt wird.

Die im Speicher abgelegten Ziffern- und/oder Buchstabenfolgen, Grafiken oder sonstigen bildlichen Darstellungen sind durch den beschriebenen externen Zugriff löschbar, können aber auch geändert und damit aktualisiert werden.

In einer Ausgestaltung der Erfindung besteht die Möglichkeit, daß dann, wenn die Bildaufnahmeeinrichtung, insbesondere eine Kamera, mit einem Speicher für die Adressierung von Datensenken verbunden ist oder einen solchen Speicher aufweist, die Statusinformationen beispielsweise auch ein Foto oder eine grafische Darstellung umfassen, das bzw. welche den Nutzer bzw. die Datensenke spezifizieren. So ist denkbar, daß ein Telefonnummernspeicher alternativ oder zusätzlich zu den Namen oder Kurznamen das Foto des Teilnehmers enthält, welches in einem Wahlmenu auf dem Kameradisplay dargeboten wird, so daß sich die Handhabung bei der Datenkommunikation zwischen Datenquelle und Datensenke vereinfacht.

Die Erfindung soll nachstehend anhand eines Ausführungsbeispiels sowie unter Zuhilfennahme von Figuren näher erläutert werden.

Hierbei zeigen:
- Fig. 1: eine prinzipielle Darstellung eines Bilddaten-Kommunikationssystems und
- Fig. 2: ein Blockschaltbild der Bildaufnahmeeinrichtung mit der Möglichkeit der Anzeige von Statusinformationen und/oder Anweisungen für den Datentransfer unter Rückgriff auf entsprechende, vorab eingespielte oder zur Verfügung gestellte grafische Darstellungen oder ähnliches aus einem Speicherbaustein.

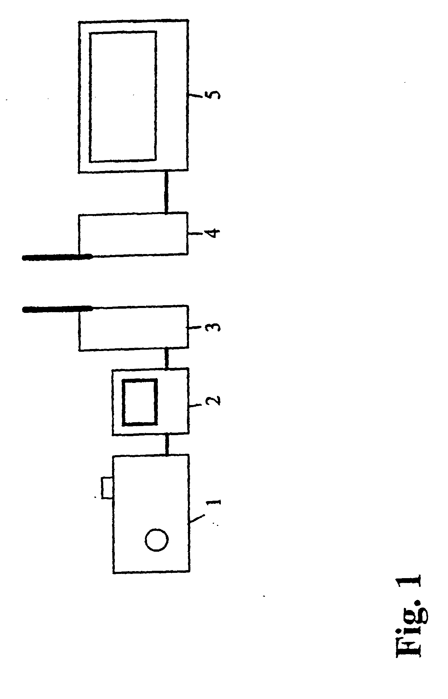

Das in der Fig. 1 gezeigte Bilddaten-Kommunikationssystem geht von einer Bilddatenquelle und mindestens einer Bilddatensenke aus. Die Bilddatenquelle umfaßt die Bildaufnahmeeinrichtung 1, eine Steuereinheit 2 und eine Sendeeinheit 3. Die Datensenke besteht aus Empfangseinheit 4 sowie Bildwiedergabeeinheit 5.

Die Bilddatenübertragung kann unter Nutzung der Sendeeinheit 3 und Empfangseinheit 4 sowohl drahtlos, z.B. über das GSM-Mobilfunknetz, aber auch drahtgebunden, z.B. über das Telefonnetz nach ISDN-Standard erfolgen.

Zur Steuerung und Kontrolle des Bildübertragungs- und -empfangsprozesses von der Datenquelle zur Datensenke werden üblicherweise Komponenten zur optischen Wiedergabe der Statusinformationen und von Bedienungsanweisungen sowohl auf der Sender- als auch auf der Empfängerseite benötigt. Bisherige Systeme verwenden zur Darstellung übertragener Bilddaten und zur Angabe entsprechender Statusinformationen den Monitor eines Computersystems, welches als Steuereinheit 2 arbeitet.

Gemäß Ausführungsbeispiel wird das bei Bildaufnahmeeinrichtungen, insbesondere digitalen Festbildkameras vorhandene Display nicht nur zur Bildwiedergabe genutzt, sondern auch zur Ausgabe von Anweisungen zur Bedienung der Kamera und für die Darstellung von Statusinformationen verwendet. Dadurch, daß auf das in der Bildaufnahmeeinrichtung vorhandene Display zurückgegriffen werden kann, ist eine zusätzliche Anzeigeeinheit bzw. ein Monitor in Verbindung mit der Steuereinheit 2 verzichtbar.

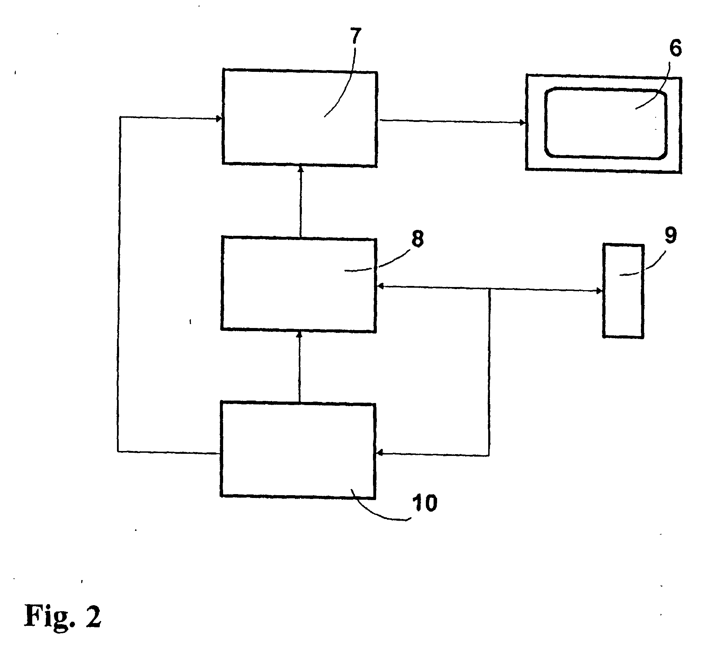

Gemäß Fig. 2, welche ein Blockschaltbild einer digitalen Kamera zeigt, besitzt diese ein z.B. LC- oder TFT-Display 6. Das Display, welches üblicherweise zur Wiedergabe von Aufnahmen dient und das die Möglichkeit der Darstellung eines Menus umfaßt, wirkt mit einem Displaytreiber 7 zusammen.

Ein Speicherbaustein 8 ist in der Lage, über eine Schnittstelle 9 extern angebotene Ziffern- und/oder Buchstabenfolgen und/oder Grafiken oder dergleichen Darstellungen, die eine Identifizierung des jeweiligen Status ermöglichen oder eine Bedienungsanweisung darstellen, zu übernehmen.

Die Bilddatentransfer-Steuereinheit 10 hat zum einen Zugriff auf die Schnittstelle 9 und ist in der Lage, entsprechende Adressenbereiche im Speicherbaustein 8 zu aktivieren und freizugeben. Über gleichzeitiges Aktivieren des Displaytreibers 7 werden die im Speicherbaustein 8 befindlichen speziellen Darstellungen auf dem Display 6 abgebildet, so daß z.B. die Information "Bilddatenempfänger wird angewählt" oder "Bilddaten erfolgreich übertragen, Sie können das Gerät abschalten" sichtbar werden.

Für das Einlesen solcher Darstellungsdatensätze besteht, wie aus dem Blockschaltbild nach Fig. 2 ersichtlich, die Möglichkeit, daß die Bilddatentransfer-Steuereinheit 10 die Datenübernahme über die Schnittstelle 9 zum Speicherbaustein 8 hin freigibt und sicherstellt, daß entsprechend vorgesehene Speicherbereiche mit diesen Informationen beschrieben werden. Bei einem bevorzugten Ausführungsbeispiel ist der Speicherbaustein 8 ein reservierter Adressierungsbereich des eigentlichen Kameraspeichers, so daß zusätzliche hardwareseitige Anforderungen auf ein Mindestmaß reduziert werden können.

Aus dem Ausführungsbeispiel wird ersichtlich, daß mit der vorstehend beschriebenen Lösung es nicht nur möglich ist, auf zusätzliche Anzeigeeinheiten für eine Steuereinheit 2 zu verzichten, sondern es kann eine solche Steuereinheit einschließlich Sendeeinheit 3 in die Kamera integriert werden, wodurch sich deren Funktionalität erhöht. Die Ausgabe und der Inhalt von Statusmeldungen auf dem Kameradisplay sind weiterhin völlig unabhängig von der verwendeten Kamera, sofern dort die Möglichkeit vorgesehen ist, das Kameradisplay entsprechend fernzusteuern, d.h. auf den Displaytreiber 7 zuzugreifen.

## Patentansprüche

1. Kommunikationsfähige Bildaufnahmeeinrichtung für Standund/oder Bewegtbilder, insbesondere digitale Kamera mit einem Halbleiter-Bildaufnahmesensor, insbesondere einem CMOS/CCD-Chip oder dergleichen Array, einer Bildaufnahme- und Bilddatentransfer-Steuereinheit für den Bilddaten- und/oder Text - oder Audiodatentransfer zu einer externen Datensenke, wie z.B. einem Personal Computer mit Bildwiedergabemonitor oder einem Massenspeicher, sowie mit einem Bediendisplay und mit Bedienelementen zur Einstellung von Bedienmodi,
**dadurch gekennzeichnet,**
**daß** ein Speicherbaustein (8) zur Aufnahme und mittelbaren Darstellung von Statusinformationen und/oder Anweisungen für den Bilddatentransfer auf dem Bediendisplay (6) vorgesehen ist, wobei der Speicherbaustein (8) mit einer Schnittstelle (9) verbunden ist, um extern angebotene Ziffern- und/oder Buchstabenfolgen und/oder Grafiken oder dergleichen Darstellungen zum Identifizieren des jeweiligen Status in den Speicherbaustein (8) zu übernehmen, und weiterhin die Bilddatentransfer-Steuereinheit (10) mindestens auf den Speicherbaustein (8) Zugriff hat, um die gewünschte Darstellung auf dem Bediendisplay (6) zur Anzeige zu bringen.

2. Kommunikationsfähige Bildaufnahmeeinrichtung nach Anspruch 1,
**dadurch gekennzeichnet,**
**daß** der Speicherbaustein (8) ein separat adressierbarer Bereich des zentralen Kameraspeichers ist oder daß die Darstellungen mit einem besonderen Kennzeichen versehen sind, um diese als Statusinformationen zu definieren.

3. Kommunikationsfähige Bildaufnahmeeinrichtung nach Anspruch 1 oder 2,
**dadurch gekennzeichnet,**
**daß** das Bediendisplay ein Kamera-Display ist, welches von einem Displaytreiber (7) ansteuerbar ist, wobei über den Treiber (7) Daten aus dem Speicherbaustein (8) nach Vorgabe durch die Steuereinheit (10) abrufbar sind.

4. Kommunikationsfähige Bildaufnahmeeinrichtung nach einem der vorangegangenen Ansprüche,
**dadurch gekennzeichnet,**
**daß** die Bilddatentransfer-Steuereinheit (10) mit einer Sendeeinheit (3) verbunden ist und daß die Sendeeinheit (3) eine Funksendebaugruppe mit Antenne zum Herstellen einer drahtlosen Verbindung über ein GSM-, UMTS-, DECT- oder dergleichen Standard-Telekommunikationsnetz und/oder eine Datentransferschnittstelle zur drahtgebundenen, bitorien/tieren Übertragung über ein ISDN- oder dergleichen Netz aufweist.

5. Kommunikationsfähige Bildaufnahmeeinrichtung nach einem der vorangegangenen Ansprüche,
**dadurch gekennzeichnet,**
**daß** das Bediendisplay (6) oder der Displaytreiber (7) extern ansteuer- oder aktivierbar sind.

6. Kommunikationsfähige Bildaufnahmeeinrichtung nach einem der vorangegangenen Ansprüche,
**dadurch gekennzeichnet,**
**daß** die Bilddatentransfer-Steuereinheit (10) integraler Bestandteil der Bildaufnahmeeinrichtung respektive Kamera ist.

7. Verfahren zum Betreiben einer kommunikationsfähigen Bildaufnahmeeinrichtung nach einem der Ansprüche 1 bis 6, **dadurch gekennzeichnet,**
**daß** zum Anzeigen von Statusinformationen und/oder Anweisungen auf dem Bediendisplay für oder beim Datentransfer von der Datenquelle zur Datensenke Ziffern- und/oder Buchstabenfolgen und/oder Grafiken oder dergleichen Darstellungen aus dem Speicherbaustein gelesen werden, wobei die Auswahl der Darstellungen von der Bilddatentransfer-Steuereinheit entsprechend den jeweiligen Befehlen und/oder Operationen automatisch veranlaßt wird.

8. Verfahren nach Anspruch 7,
**dadurch gekennzeichnet,**
**daß** die im Speicherbaustein abgelegten Ziffern- und/oder Buchstabenfolgen und/oder Grafiken oder dergleichen Darstellungen durch externen Zugriff nach positiver Berechtigungsüberprüfung gelöscht und/oder geändert und dadurch aktualisiert werden können.

## Claims

1. Communications-enabled image recording device for still and/or moving images, in particular a digital camera having a semiconductor image recording sensor, in particular a CMOS/CCD chip or similar array, an image recording and image data transfer control unit for the image data and/or text or audio data transfer to an external data sink, such as e.g. a personal computer with image reproduction monitor or a mass storage device, and also having an operating display and having operating elements for setting operating modes,
**characterized**
**in that** provision is made of a memory module (8) for holding and indirectly representing status information and/or instructions for the image data transfer on the operating display (6), the memory module (8) being connected to an interface (9) in order to accept into the memory module (8) externally offered digit and/or letter sequences and/or graphics or similar representations for identifying the respective status, and, furthermore, the image data transfer control unit (10) has access at least to the memory module (8) in order to display the desired representation on the operating display (6).

2. Communications-enabled image recording device according to Claim 1,
**characterized**
**in that** the memory module (8) is a separately addressable area of the central camera memory, or
**in that** the representations are provided with a particular identification symbol in order to define them as status information.

3. Communications-enabled image recording device according to Claim 1 or 2,
**characterized**
**in that** the operating display is a camera display which can be driven by a display driver (7), in which case, via the driver (7), data can be fetched from the memory module (8) according to specification by the control unit (10).

4. Communications-enabled image recording device according to one of the preceding claims,
**characterized**
**in that** the image data transfer control unit (10) is connected to a transmitting unit (3), and in that the transmitting unit (3) has a radio transmitting assembly with antenna for establishing a wire-free connection via a GSM, UMTS, DECT or similar standard telecommunications network and/or a data transfer interface for wire-based, bit-oriented transmission via an ISDN or similar network.

5. Communications-enabled image recording device according to one of the preceding claims,
**characterized**
**in that** the operating display (6) or the display driver (7) can be externally driven or activated.

6. Communications-enabled image recording device according to one of the preceding claims,
**characterized**
**in that** the image data transfer control unit (10) is an integral part of the image recording device or camera.

7. Method for operating a communications-enabled image recording device according to one of Claims 1 to 6
**characterized**
**in that**, in order to display status information and/or instructions on the operating display for or during the data transfer from the data source to the data sink, digit and/or letter sequences and/or graphics or similar representations are read from the memory module, the selection of the representations being automatically initiated by the image data transfer control unit in accordance with the respective commands and/or operations.

8. Method according to Claim 7,
**characterized**
**in that** the digit and/or letter sequences and/or graphics or similar representations which are stored in the memory module can be erased and/or changed and thereby updated by external access after positive checking of authorization.

## Revendications

1. Dispositif de prise de vues convenant pour la prise d'images immobiles et/ou en mouvement et se prêtant à la communication, et plus particulièrement caméra numérique comprenant un capteur de prise de vues semi-conducteur, en particulier une puce CCD/CMOS ou autres réseaux de ce genre, une unité de commande de la prise de vues et du transfert de données de type image servant au transfert de données de type image et/ou de données textuelles et/ou de données audio vers un collecteur de données externe tel que, par exemple, un ordinateur PC avec écran de visualisation d'images ou une mémoire de masse, ainsi qu'un écran de commande et des éléments de commande permettant de régler des modes opératoires, **caractérisé en ce qu'**est prévu un élément de mémoire (8) acceptant des informations de statut et/ou des instructions utiles au transfert de données de type image et permettant de les visualiser indirectement sur l'écran de commande (6), ledit élément de mémoire (8) étant connecté à une interface (9) pour accepter, dans ledit élément de mémoire (8), des suites de chiffres et/ou de lettres et/ou des graphiques ou autres productions de ce genre venant de l'extérieur et permettant d'identifier chaque statut, et l'unité de commande (10) servant au transfert de données de type image ayant accès au moins à l'élément de mémoire (8) pour faire apparaître la représentation souhaitée sur l'écran de commande (6).

2. Dispositif de prise de vues se prêtant à la communication, selon la revendication 1, **caractérisé en ce que** l'élément de mémoire (8) est une zone de la mémoire centrale de la caméra adressable séparément ou **en ce que** les productions sont pourvues d'un identificateur particulier qui les définit comme étant des informations de statut.

3. Dispositif de prise de vues se prêtant à la communication, selon la revendication 1 ou 2, **caractérisé en ce que** l'écran de commande est l'écran d'une caméra pouvant répondre à un driver d'affichage (7) qui peut appeler des données contenues dans l'élément de mémoire (8) conformément aux instructions de l'unité de commande (10).

4. Dispositif de prise de vues se prêtant à la communication, selon l'une des revendications précédentes, **caractérisé en ce que** l'unité de commande (10) servant au transfert de données de type image est connectée à une unité émettrice (3) et **en ce que** ladite unité émettrice (3) présente un ensemble de radioémission comprenant une antenne pour établir une communication sans fil via un réseau de télécommunication standard GSM, UMTS, DECT ou similaires et/ou une interface de transfert de données se prêtant à la transmission binaire par câble via un réseau ISDN ou similaires de ce genre.

5. Dispositif de prise de vues se prêtant à la communication, selon l'une des revendications précédentes, **caractérisé en ce que** l'écran de commande (6) respectivement le driver d'affichage (7) peuvent être commandés ou activés en externe.

6. Dispositif de prise de vues se prêtant à la communication, selon l'une des revendications précédentes, **caractérisé en ce que** l'unité de commande (10) servant au transfert de données de type image fait partie intégrante du dispositif de prise de vues respectivement de la caméra.

7. Procédé pour exploiter un dispositif de prise de vues selon l'une des revendications 1 à 6, **caractérisé en ce que** des suites de chiffres et/ou de lettres et/ou des graphiques ou autres productions de ce genre sont extraites de l'élément de mémoire pour afficher sur l'écran de commande des informations de statut et/ou des instructions utiles et ce, en vue du ou pendant le transfert de données de la source de données vers le collecteur de données, l'unité de commande servant au transfert de données de type image sélectionnant automatiquement les représentations en fonction des instructions et/ou des opérations correspondantes.

8. Procédé selon la revendication 7, **caractérisé en ce que** l'accès externe permet d'effacer de la mémoire les suites de chiffres et/ou de lettres et/ou les graphiques ou autres productions de ce genre qui y ont été déposées et/ou de les modifier et donc de les actualiser.
